# EUROPÄISCHE PATENTSCHRIFT

(11) **EP 1 940 674 B1**
(45) Veröffentlichungstag und Bekanntmachung des Hinweises auf die Patenterteilung: **07.10.2009**
(21) Anmeldenummer: 07817708.6
(22) Anmeldetag: 20.10.2007
(51) Int. Cl.: B62D 55/00, B62D 55/32, F16H 7/00

(54) **VERFAHREN ZUR MESSUNG DES KETTENDURCHHANGS AN EINEM KETTENFAHRZEUG**
METHOD FOR MEASURING THE SLACK OF CHAIN ON A TRACKED VEHICLE
PROCÉDÉ DE MESURE DE LA FLÈCHE DE CHAÎNE SUR UN VÉHICULE CHENILLÉ

(30) Priorität: 25.10.2006 DE 102006050129
(43) Veröffentlichungstag der Anmeldung: 09.07.2008
(73) Patentinhaber: Krauss-Maffei Wegmann GmbH & Co. KG, 80997 München (DE)
(72) Erfinder: WITTMANN, Christoph, 85221 Dachau (DE)
(74) Vertreter: Feder Walter Ebert
(86) Internationale Anmeldenummer: PCT/DE2007/001874
(87) Internationale Veröffentlichungsnummer: WO 2008/049396

(56) Entgegenhaltungen:
- AT-B- 213 996
- DE-A1- 10 044 318

## Beschreibung

Die Erfindung betrifft ein Verfahren zur Messung des Kettendurchhangs an einem Kettenfahrzeug.

Bei Kettenfahrzeugen, insbesondere militärischen Kettenfahrzeugen, wird die Kettenspannung über den Kettendurchhang am Obertrum der Kette gemessen. Es ist bekannt, hierzu eine Schnur über einen vorgegebenen Längenabschnitt zwischen zwei Stützrollen des Obertrums der Kette aufzuspannen. Die Schnur wird über die Endverbinder der Kette gelegt, oder an diesen befestigt und zum Aufspannen beispielsweise mit Gewichten beschwert und sie erstreckt sich im allgemeinen über eine vorgegebene Anzahl von Endverbindern. Es wird dann der Durchhang des Obertrums der Kette auf diesem Längenabschnitt gegenüber der Schnur gemessen.

Diese Messung wird außerordentlich umständlich und aufwendig bei Fahrzeugen, bei welchen das Obertrum der Kette nicht zugänglich ist, so dass Kettenblenden, Kettenschürzen oder Schutzelemente erst abgenommen oder weggeklappt werden müssen, damit die Meßschnur eingehängt und der Durchhang ermittelt werden kann.

Im Dokument DE 100 44 318 A1 ist ein Gerät zur Bestimmung des Kettendurchhangs bei motorisierten Zweirädern beschrieben, das unter der Mitte des Kettenantriebs auf dem Erdboden aufgestellt wird. Eine Stange, deren Spitze zwischen die Kettenglieder passt, wird nach oben ausgefahren, wobei das untere Kettentrum um den Durchhang angehoben wird. Der Ausfahrweg wird gemessen und angezeigt.

Das Dokument US 3,186,099 offenbart ein Messwerkzeug mit einem als Metallstab ausgebildeten Verlängerungselement, das an einem Ende einen Permanentmagneten und am anderen Ende eine Öse zum Durchziehen einer Schnur aufweist.

Das Dokument DE 929 510 C beschreibt einen Ständer mit einem Metallstab, der an einem Ende eine Befestigungsplatte mit Permanentmagneten trägt, während am anderen Ende eine Mess-Skala angeordnet ist.

Der Erfindung liegt die Aufgabe zugrunde, ein Verfahren zur Messung des Kettendurchhangs an einem Kettenfahrzeug bereitzustellen, das es ermöglicht, den Kettendurchhang zu bestimmen, ohne vorher das Obertrum der Kette abdeckende Schutzelemente entfernen zu müssen.

Die Lösung dieser Aufgabe geschieht mit dem Verfahren gemäß den Merkmalen aus dem Patentanspruch 1. Vorteilhafte Weiterbildungen des Verfahrens sind in den abhängigen Ansprüchen 2 bis 6 beschrieben.

Ein Grundgedanke der Erfindung besteht darin, die Messung des Kettendurchhangs auf eine gegenüber dem Obertrum der Kette tiefer liegende Ebene zu verlegen. Das Vergleichselement, beispielsweise die Schnur, wird nicht mehr direkt an den Endverbindern befestigt, sondern es werden beispielsweise als Stäbe ausgebildete Verlängerungselemente derart am Obertrum der Kette befestigt, dass ein erstes und ein zweites Verlängerungselement jeweils am Anfangs- und Endpunkt des vorgegebenen Längenabschnitts angeordnet sind, während ein drittes Verlängerungselement genau auf der Mitte des Längenabschnitts angeordnet ist. Das Vergleichselement, also beispielsweise die Schnur, wird nunmehr zwischen den unteren Enden des ersten und zweiten Verlängerungselementes aufgespannt und nun kann mit dem dritten Verlängerungselement, das am unteren Ende eine Meßskala trägt, direkt der Durchhang des Obertrums gemessen werden. Wie weiter unten anhand eines Ausführungsbeispiels erläutert, können die Verlängerungselemente zu ihrer Befestigung an einer Kette aus Stahl an ihrem einen Ende eine als Permanentmagnet ausgebildete Befestigungsplatte tragen. Dies ermöglicht eine sehr rasche Montage der Verlängerungselemente.

Mit diesem Verfahren kann die Kettenspannung auch bei montierten Kettenblenden rasch gemessen werden. So ist beispielsweise bei schweren Schutzelementen keine zusätzliche Hebevorrichtung oder Massenentlastungen für den Bediener notwendig.

Im folgenden wird ein Ausführungsbeispiel für das erfindungsgemäße Verfahren und die hierbei verwendeten Vorrichtungen anhand einer Zeichnung näher erläutert.

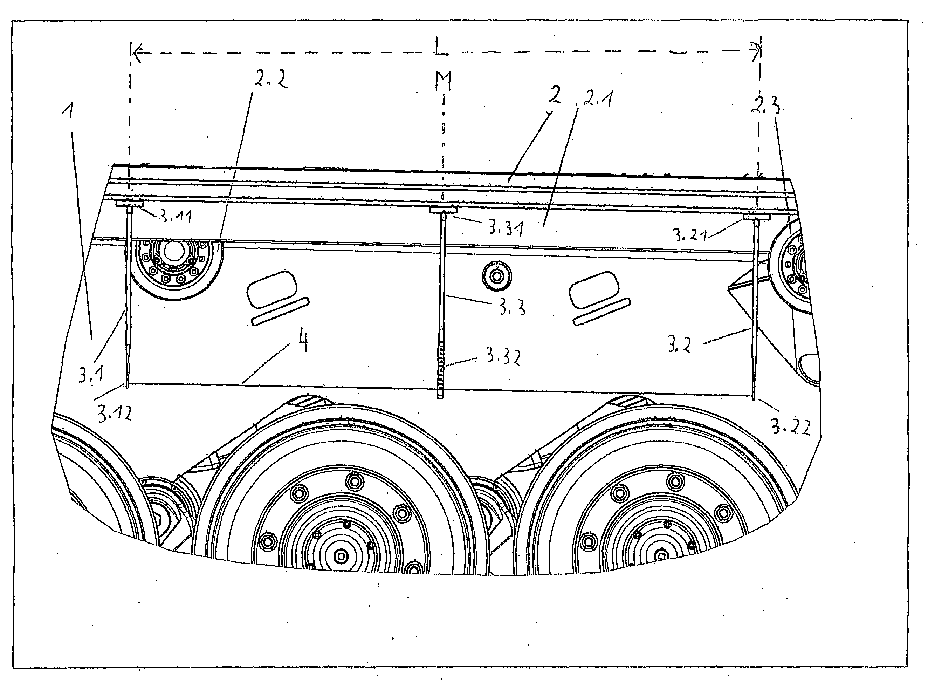

Die einzige Figur zeigt in schematisierter Darstellung einen Ausschnitt aus dem Seitenbereich eines beispielsweise militärischen Kettenfahrzeugs, bei dem zur Sichtbarmachung des Verfahrens und der verwendeten Vorrichtungen die Kettenblenden abgenommen sind. Es wird aber darauf hingewiesen, dass das Verfahren, wie weiter unten gezeigt, auch bei montierten Kettenblenden durchgeführt werden kann.

Das Kettenfahrzeug 1 besitzt eine Kette, von der in der Figur ein Teil des Obertrums 2 sichtbar ist, das Führungen 2.1 aufweist und über Stützrollen 2.2 und 2.3 läuft.

Die Kettenspannung soll über dem Längenabschnitt L gemessen werden, dessen Mitte mit M bezeichnet ist.
Am Obertrum 2 der Kette sind stabförmige Verlängerungselemente 3.1, 3.2 und 3.3 in vertikaler Richtung nach unten verlaufend befestigt. Zur Befestigung an der aus Stahl bestehenden Kette besitzen die Verlängerungselemente an ihrem in der Zeichnung oberen Ende als Permanentmagnete ausgebildete Befestigungsplatten 3.11, 3.21 und 3.31. Die Verlängerungselemente 3.1 und 3.2 sind jeweils am Anfangs- und am Endpunkt des vorgegebenen Längenabschnitts L angeordnet. Zwischen ihren unteren Enden 3.12 und 3.22 ist als Vergleichselement eine Schnur 4 so aufgespannt, dass sie in horizontaler Richtung verläuft. Hierzu können beispielsweise die Enden 3.12 und 3.22 jeweils mit einer Öse versehen sein, durch welche die Schnur 4 hindurchgezogen ist, wobei die beiden freien Enden in nicht dargestellter Weise mit Gewichten beschwert sein können. Es ist aber auch eine Befestigung in anderer Weise möglich. Das dritte auf der Mitte M liegende Verlängerungselement 3.3 ist im Bereich seines unteren Endes mit einer Meßskala 3.32 ausgestattet.

Es läßt sich aus der Zeichnung unmittelbar erkennen, dass der Durchhang des Obertrums 2 der Kette auf dem Längenabschnitt L direkt mit Hilfe des Verlängerungselements 3.3 gemessen werden kann.

Durch die Anordnung der stabförmigen Verlängerungselemente 3.1, 3.2 und 3.3 sind der Anfangspunkt und der Endpunkt des Längenabschnitts L, also der Meßstrecke, sowie der Punkt des größten Durchhangs auf der Mitte M dieses Längenabschnitts quasi um die Länge der Stäbe 3.1, 3.2 und 3.3 nach unten verlegt. Diese Verlängerungselemente können insbesondere bei magnetischer Befestigung ohne großen Aufwand bei montierter Kettenblende von unten eingeführt und an das Obertrum 2 der Kette angesetzt werden, so dass die Messung des Durchhangs in dem unteren der Einsicht und dem Zugriff zugänglichen Bereich durchgeführt werden kann.

## Patentansprüche

1. Verfahren zur Messung des Kettendurchhangs an einem Kettenfahrzeug, bei welchem der Durchhang der Kette auf einem vorgegebenen Längenabschnitt des Obertrums der Kette mit dem Verlauf eines über den gleichen Längenabschnitt aufgespannten, sich in horizontaler Richtung erstreckenden, flexiblen Vergleichselements verglichen und der vertikale Abstand zwischen dem Obertrum und dem Vergleichselement auf der Mitte des Längenabschnitts gemessen wird, **gekennzeichnet durch** folgende Verfahrensschritte
a)
am Obertrum (2) der Kette werden drei vom Obertrum vertikal nach unten laufende Verlängerungselemente (3.1, 3.2, 3.3) vorgegebener Länge derart befestigt, dass ein erstes und ein zweites Verlängerungselement (3.1, 3.2) jeweils am Anfangs- und Endpunkt des vorgegebenen Längenabschnitts (L) des Obertrums (2) angeordnet sind, während ein drittes Verlängerungselement (3.3) auf der Mitte (M) des vorgegebenen Längenabschnitts (L) angeordnet ist;
b)
am ersten und zweiten Verlängerungselement (3.1, 3.2) werden in vorgegebener Höhe unterhalb des Obertrums (2) der Kette die Enden des flexiblen Vergleichselements (4) derart befestigt, dass dieses in horizontaler Richtung zwischen dem ersten und zweiten Verlängerungselement aufgespannt ist;
c)
mittels des dritten Verlängerungselements (3.3), das eine Meßskala (3.32) trägt, wird der vertikale Abstand der Mitte des Längenabschnitts (L) des Obertrums (2) der Kette von der Mitte des Vergleichselements (4) bestimmt.

2. Verfahren nach Anspruch 1, **dadurch gekennzeichnet, dass** als flexibles Vergleichselement (4) eine Schnur dient.

3. Verfahren nach Anspruch 1 oder 2, **dadurch gekennzeichnet, dass** als Verlängerungselemente (3.1, 3.2, 3.3) Stäbe dienen, die mit einem Ende am Obertrum (2) der Kette befestigt werden.

4. Verfahren nach Anspruch 3, **dadurch gekennzeichnet, dass** zur Befestigung der Verlängerungselemente an einer Kette aus Stahl Verlängerungselemente (3.1 - 3.3) verwendet werden, die an ihrem einen Ende eine als Permanentmagnet ausgebildete Befestigungsplatte (3.11, 3.21, 3.31) tragen.

5. Verfahren nach Anspruch 2 und gegebenenfalls einen der Ansprüche 3 oder 4, **dadurch gekennzeichnet, dass** als erstes und zweites Verlängerungselement (3.1, 3.2) Verlängerungselemente verwendet werden, die an dem im Gebrauch vom Obertrum (2) der Kette abgewandten Ende eine Öse zum Befestigen oder Durchziehen der Schnur (4) tragen.

6. Verfahren nach den Ansprüchen 2 und 5, **dadurch gekennzeichnet, dass** zum Aufspannen der Schnur (4), diese durch die Ösen des ersten und zweiten Verlängerungselements (3.1, 3.2) gezogen und die durchgezogenen Enden der Schnur jeweils mit Gewichtstücken beschwert werden.

## Claims

1. Method of measuring the slack of a track on a tracked vehicle, in which the slack of the track along a defined portion of the length of the top run of the track is compared with the course of a horizontally extending, flexible comparison element that is tensioned over the same portion of the length and the vertical distance between the top run and the comparison element is measured at the centre of the length portion, **characterized by** the following method steps
a) three extension elements (3.1, 3.2, 3.3) of defined length that extend vertically down from the top run are fastened to the top run (2) of the track in such a way that a first and a second extension element (3.1, 3.2) are disposed respectively at the start point and end point of the defined length portion (L) of the top run, while a third extension element (3.3) is disposed at the centre (M) of the defined length portion (L);
b) the ends of the flexible comparison element (4) are fastened to the first and second extension element (3.1, 3.2) at a defined height below the top run (2) of the track in such a way that the flexible comparison element (4) is tensioned in horizontal direction between the first and second extension element;
c) by means of the third extension element (3.3), which carries a measuring scale (3.32), the vertical distance of the centre of the length portion (L) of the top run (2) of the track from the centre of the comparison element (4) is determined.

2. Method according to claim 1, **characterized in that** a cord is used as a flexible comparison element (4).

3. Method according to claim 1 or 2, **characterized in that** rods, which are fastened by one end to the top run (2) of the track, are used as extension elements (3.1, 3.2, 3.3).

4. Method according to claim 3, **characterized in that** to fasten the extension elements to a track made of steel extension elements (3.1 - 3.3) are used, which carry on their one end a fastening plate (3.11, 3.21, 3.31) in the form of a permanent magnet.

5. Method according to claim 2 and optionally one of claims 3 or 4, **characterized in that** as first and second extension element (3.1, 3.2) extension elements are used, which on the end that while in use is remote from the top run (2) of the track carry an eye for fastening or drawing the cord (4) through.

6. Method according to claims 2 and 5, **characterized in that** the cord (4) for tensioning thereof is drawn through the eyes of the first and second extension element (3.1, 3.2) and the drawn-through ends of the cord are loaded in each case with weights.

## Revendications

1. Procédé de mesure du fléchissement d'une chaîne sur un véhicule chenillé, procédé dans lequel on compare le fléchissement de la chaîne sur un tronçon de longueur prédéfini du brin supérieur de la chaîne, au tracé d'un élément de comparaison flexible, tendu sur le même tronçon de longueur et s'étendant dans la direction horizontale, et on mesure la distance verticale entre le brin supérieur et l'élément de comparaison au milieu du tronçon de longueur, **caractérisé par** les étapes suivantes :
a) on fixe sur le brin supérieur (2) de la chaîne, trois éléments de prolongement (3.1, 3.2, 3.3) de longueur prédéfinie, s'étendant verticalement vers le bas à partir du brin supérieur, de telle sorte qu'un premier et un deuxième élément de prolongement (3.1, 3.2) sont disposés respectivement au point de départ et au point final du tronçon de longueur (L) prédéfini sur le brin supérieur (2), alors qu'un troisième élément de prolongement (3.3) est disposé au milieu (M) du tronçon de longueur (L) prédéfini ;
b) on fixe sur le premier et le deuxième élément de prolongement (3.1, 3.2), à une hauteur prédéfinie en dessous du brin supérieur (2) de la chaîne, les extrémités de l'élément de comparaison (4) flexible, de telle sorte que celui-ci est tendu dans la direction horizontale entre le premier et le deuxième élément de prolongement ;
c) on détermine la distance verticale entre le milieu du tronçon de longueur (L) du brin supérieur (2) de la chaîne et le milieu de l'élément de comparaison (4), au moyen du troisième élément de prolongement (3.3), qui porte une graduation de mesure (3.32).

2. Procédé selon la revendication 1, **caractérisé en ce que** l'élément de comparaison (4) flexible est formé par une corde.

3. Procédé selon la revendication 1 ou 2, **caractérisé en ce que** les éléments de prolongement (3.1, 3.2, 3.3) sont formés par des tiges, qui sont fixées par une extrémité, au brin supérieur (2) de la chaîne.

4. Procédé selon la revendication 3, **caractérisé en ce que** pour fixer les éléments de prolongement à une chaîne en acier, on utilise des éléments de prolongement (3.1 - 3.3), qui portent sur l'une de leurs extrémités une plaque de fixation (3.11, 3.21, 3.31) réalisée sous la forme d'un aimant permanent.

5. Procédé selon la revendication 2 et, le cas échéant une des revendications 3 ou 4, **caractérisé en ce que** le premier et le deuxième élément de prolongement (3.1, 3.2) utilisés sont des éléments de prolongement qui, au niveau de leur extrémité détournée, en cours de service, du brin supérieur (2) de la chaîne, portent un anneau pour la fixation ou le passage de la corde (4).

6. Procédé selon les revendications 2 et 5, **caractérisé en ce que**, pour tendre la corde (4), celle-ci est tirée à travers les anneaux du premier et du deuxième élément de prolongement (3.1, 3.2) et les extrémités tirées à travers lesdits anneaux sont alourdies chacune par des poids.
